# EUROPEAN PATENT SPECIFICATION

(11) **EP 3 036 662 B1**
(45) Date of publication and mention of the grant of the patent: **24.04.2019**
(21) Application number: 14758458.5
(22) Date of filing: 15.08.2014
(51) Int. Cl.: G06F 17/30

(54) **GENERATING CACHE QUERY REQUESTS**
ERZEUGUNG VON CACHE SUCHABFRAGEN
GÉNÉRATION DE DEMANDES D'INTERROGATIONS D'UNE MÉMOIRE CACHE

(30) Priority: 21.08.2013 CN 201310367225; 14.08.2014 US 201414459667
(43) Date of publication of application: 29.06.2016
(73) Proprietor: Alibaba Group Holding Limited, Grand Cayman (KY)
(72) Inventor: ZHENG, Nan, Hangzhou 311121 (CN)
(74) Representative: McKinnon, Alistair James
(86) International application number: PCT/US2014/051347
(87) International publication number: WO 2015/026667

(56) References cited:
- WO-A2-2004/079485
- US-A1- 2002 004 813
- US-A1- 2002 111 992
- US-A1- 2012 209 945

## Description

### CROSS REFERENCE TO OTHER APPLICATIONS

This application claims priority to People's Republic of China Patent publication CN 104424199 entitled A SEARCH METHOD AND DEVICE, filed August 21, 2013.

### FIELD OF THE INVENTION

The present application relates to the field of data caching. In particular, it relates to techniques for caching search data.

### BACKGROUND OF THE INVENTION

With the development of Internet technology, it has become a very ordinary matter for users to search for information online. Generally, website service systems receive search queries from users and send back to users search results corresponding to these search queries. Because the quantity of search results is often large and cannot be entirely displayed in one web page or one interface, there are various ways of displaying search results to enable users to browse all the search results.

Two example types of displaying search results on search result pages (SRP) include: 1) page-by-page and 2) cascade. In the page-by-page approach of displaying search results, the user can browse the search results that can be displayed at one page and select a "Next page" button to retrieve search results to populate a next page of search results. In the cascade approach of displaying search results, search results are dynamically retrieved and displayed as a user scrolls down to each new area of a webpage. Each time that a user scrolls down to a new area of a search results page, a new set of search results will be retrieved and displayed until there are no more search results to return or the user navigates away from the search results page.

Conventionally, websites presented in a non-mobile device context generally display search results using the page-by-page approach. But websites that are presented in a mobile device context generally display search results using the cascade approach.

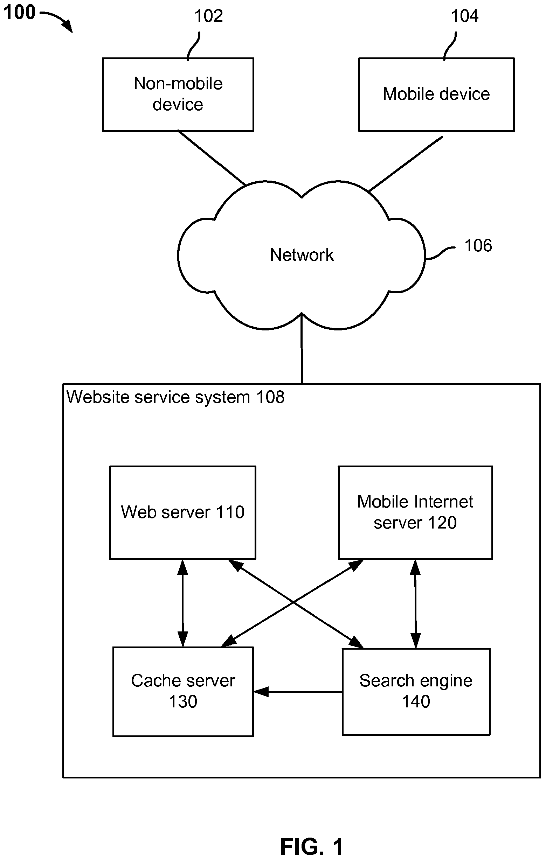

FIG. 1 is a diagram showing an embodiment of a conventional system architecture of a website service system for handling user search requests.

Website service system 108 of system 100 is configured to process search requests received from non-mobile device 102 and mobile device 104 via network 106. For example, website service system 108 is configured to operate the same website but send data to a device based on the display type (e.g., page-by-page or cascade) associated with the device. For example, in response to a search request from non-mobile device 102, website service system 108 is configured to return search result data that can be displayed in a page-by-page display type. But in response to a search request from mobile device 104, website service system 108 is configured to return search result data that can be displayed in a cascade display type. Information identifying a display type (e.g., page-by-page or cascade) that is associated with a user request may be included in the user request.

When a user conducts a search through non-mobile device 102, a (e.g., HTTP) request is sent to web server 110 of website service system 108. Web server 110 receives the user request and generates a search request associated with the page-by-page display type based on the user request. The search request includes user query keywords, the starting position of the search results that are requested to be returned, and the quantity of search results that is requested to be returned. Then, web server 110 uses the search request as a basis for querying cache server 130 for whether there are search results stored in the cache that correspond to the search request, i.e., whether there is a cache hit. If there is a cache hit, web server 110 will directly obtain the search results from cache server 130 and send them back to non-mobile device 102. If there is not a cache hit, then web server 110 will request search engine 140 to conduct a search based on the generated search request to obtain corresponding search results. Then, web server 110 will send the search results obtained by search engine 140 back to non-mobile device 102. Search engine 140 can also store the search results into cache server 130 for subsequent search requests.

When the user conducts a search through (e.g., an application installed at) mobile device 104, a (e.g., HTTP) request is sent to mobile Internet server 120 of website service system 108. Mobile Internet server 120 receives the user request and generates a search request associated with the cascade display type based on the user request. The search request also includes user query keywords, the starting position of the requested search results, and the quantity of requested search results. Then, mobile Internet server 120 uses the search request as a basis for querying cache server 130 for whether the cache contains search results corresponding to the search request, i.e., whether or not there is a cache hit. If there is a cache hit, then mobile Internet server 120 will directly obtain the search results from cache server 130 and send them back to the mobile device 104. If there is not a cache hit, then mobile Internet server 120 will request search engine 140 to conduct a search based on the generated search request to obtain the corresponding search results. Then, mobile Internet server 120 will send the search results obtained by search engine 140 back to mobile device 104. Search engine 140 can also store the search results into cache server 130 for subsequent search requests.

For example, suppose that a user searches using the keywords of "apple iphone4" at an e-commerce website using either a mobile device or a non-mobile device and that there are a total of 18 product matches.

With the page-by-page display type, for example, one page of search results can display up to ten products.

The first page of the search results is to display the first ten search results that match "apple iphone4." The keywords included in the corresponding search request are "apple iphone4." The starting position parameter for the search results is "0," and the search result display quantity (e.g., the maximum number of products that can be displayed at a search results page) is "10." Thus, the search request constructed by the search engine can be expressed as "q=apple iphone4&s=0&n=10," where q comprise the keywords of the user request, s comprises the starting position of the search results that are requested to be returned, and n is the quantity of search results that is requested to be returned.

The results sent back by the search engine are the first ten search results (e.g., of search results ranked by a ranking model).

The second page of the search results is to display search results 11 through 20, and the corresponding search request can be expressed as "q=apple iphone4&s=10&n=10." The results sent back can be the last 8 search results (e.g., of search results ranked by a ranking model) since there are 18 total search results for the keywords "apple iphone4."

With the cascade display type, for example, five products are displayed initially, after which three products are loaded in response to each subsequent loading of more search results at the search results page.

For the five products that are loaded initially, the corresponding search request can be expressed as "q=apple iphone4&s=0&n=5." The results sent back are the first 5 search results (e.g., of search results ranked by a ranking model).

The second loading includes three products and the corresponding search request can be expressed as "q=apple iphone4&s=5&n=3." The results sent back are the search results 6 through 8 (e.g., of search results ranked by a ranking model).

The third loading includes three products and the corresponding search request can be expressed as "q=apple iphone4&s=8&n=3." The results sent back are the search results 9 through 11 (e.g., of search results ranked by a ranking model).

When the starting position parameter and the quantity of requested search results parameter vary for user requests associated with different display types, the search requests generated by the search engine will also vary. User requests associated with different display types (e.g., page-by-page and cascade) are used to generate different search requests, even when the user has input the same query terms.

Generally, the way that the cache server stores an index for cached search results is to use key-value pairs. When the cache server stores search results, the search request is used as a key in the index. The value corresponding to the key is the search results corresponding to the search request of the key. That is, the search request and search results have a one-to-one, key-value correspondence in the cache server. With regard to different display types such as page-by-page and cascade, because the search requests generated from user requests associated with different display types are different, the resulting search results from the different search requests will also be different. As a result, a key-value pair stored in a cache based on a user request from a device that uses page-by-page display and a key-value pair stored in a cache based on a user request from a device that uses the cascade display will be different, even if the search results associated with the different user requests overlap. Due to such differences, conventionally, devices that use different display types are not able to share search results that are stored in the cache. Thus, differences in search result display types will lower the probability of cache hits in a cache server that caches search results returned for these different display techniques.

For example, the page-by-page display type was used to display search results retrieved for a user that submitted a user request that included the query terms of "apple iphone4" in a first period of time, and the cascade display technique was used to display search results retrieved for the same user or a different user that submitted a user request that included the same query terms of "apple iphone4" in a later period of time. The device that employed the page-by-page display technique performs the operation of first displaying the first page search results and then receiving a user selection to view the second page search results. The device that employed the cascade display technique loads an initial set of search results and then receives two successive requests for further loading in response to the user's actions of scrolling further down the page of search results. As a result of the user interactions with the displayed search results as described above in the page-by-page and cascade display types, the cache server can save content as shown in Table 1 below:

**Table 1**

| Key/ Index | Value |
|---|---|
| q=apple iphone4&s=0&n=10 | "Product 1, Product 2, Product 3, Product 4, Product 5, Product 6, Product 7, Product 8, Product 9, Product 10" |
| q=apple iphone4&s=10&n=10 | "Product 11, Product 12, Product 13, Product 14, Product 15, Product 16, Product 17, Product 18" |
| q=apple iphone4&s=0&n=5 | "Product 1, Product 2, Product 3, Product 4, Product 5" |
| q=apple iphone4&s=5&n=3 | "Product 6, Product 7, Product 8" |
| q=apple iphone4&s=8&n=3 | "Product 9, Product 10, Product 11" |

Although the search requests corresponding to the above user operations contain the same keywords of "apple iphone4," the search result starting position parameters and search result quantities are different for user requests associated with the page-by-page and cascade display techniques. Therefore, the search requests generated from such user requests also differ. Given the conventional technique of storing in a cache index a search request and its corresponding search results as a key-value pair, even though the search results associated with the page-by-page display type acquired in the previous period of time (associated with the first three entries of Table 1) are already present in the cache when the cache was searched for search results matching the subsequently received search requests associated with the cascade display technique, due to the different formats of the page-by-page search requests and cascade search results, the subsequent cascade search requests could not match the search request keys of the search results that were previously used to cache page-by-page search results. Therefore, the previously cached page-by-page search results could not be used for the subsequent cascade search requests and as a result, new search results were generated for the subsequent cascade search requests using a search with a search engine and the search results were stored in the cache (associated with the last two entries of Table 1).

A quick solution to the problem described above is to force the display quantity for one page of search results used by the page-by-page display type to be the same as the display quantity of each loading used by the cascade display type. In this way, the s parameters and n parameters would match for both of these display types and so search requests generated for both types would be the same.

However, such an approach would in fact be unfeasible because the display quantity of one page of products used by the page-by-page display type and the display quantity of each loading used by the cascade type are decided by their respective application scenarios. Examples of the different application scenarios in which the page-by-page and cascade display types are used are as follows: The page-by-page display type is often employed for non-mobile devices (e.g., a laptop or desktop computer), which generally require a large number of products per page because retrieving search results to display per page has a certain operating cost. The cascade display type is often employed by mobile devices, which generally permit a smaller quantity of search results to be retrieved per request because of their network environments and hardware restrictions. The amount of search results that is requested is determined on a need basis so that network resources can be efficiently used. The two display types have their respective and independently developed needs and therefore the imposition of a uniform display quantity for both the page-by-page and cascade display types may interfere with the context in which each display type is used.

US 2012 209945 describes a method for optimizing resources on a web server is provided. A web page may include areas for displaying content that is time consuming to retrieve. The content may be geographically far away or the content server itself may be slow. A caching proxy between the web server and the content server responds to requests for data immediately, with or without the data requested from the cache. On a cache miss, the caching proxy asynchronously retrieves data so that the next time the same content is requested, the data should be available in the cache. Asynchronous retrieval means that no valuable resources are tied up on the web server while waiting for the content to be provided from the content server. The initial web page sent from the web server to the web browser includes retry logic and the data may be retrieved from the cache during one of the retries.

The invention is defined in the claims.

### BRIEF DESCRIPTION OF THE DRAWINGS

Various examples of the invention are disclosed in the following detailed description and the accompanying drawings.
FIG. 1 is a diagram showing an embodiment of a conventional system architecture of a website service system for handling user search requests.
FIG. 2 is a diagram showing an example of a system for generating cache query requests.
FIG. 3 is a flow diagram showing an example of a process for generating cache query requests.
FIG. 4 is a diagram showing an example of a process of generating cache query requests
FIG. 5 is a diagram showing an example of a system for generating cache query requests.
FIG. 6 is a functional diagram illustrating an example of a programmed computer system for implementing the generation of cache query requests.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more examples of the invention is provided below along with accompanying figures that illustrate the principles of the invention. The invention is described in connection with such examples, but the invention is not limited to any example. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Examples of generating cache query requests are described herein. A user query is received from a device. A display type specific search request is generated based at least in part on the user query. A cache query request is generated based at least in part on the display type specific search request and a configured cache granularity. In various examples, a "cache granularity" comprises a maximum quantity of search results that can be retrieved for each cache query request. In various examples, a cache indexes stored content using key-value pairs, where a key comprises a cache query request and the corresponding value comprises previously acquired search results corresponding to that cache query request. It is determined whether corresponding search results can be found for the current cache query request in the cache. In the event that the corresponding search results are found for the current cache query request in the cache, a portion of the found corresponding search results that are relevant to the display type specific search request is extracted and sent back to the device. Therefore, by converting different display type specific search requests associated with different formats into cache query requests of a uniform format, search results corresponding to cache query requests can be stored in and retrieved from the cache so that the different display type specific search requests can ultimately share the cached contents.

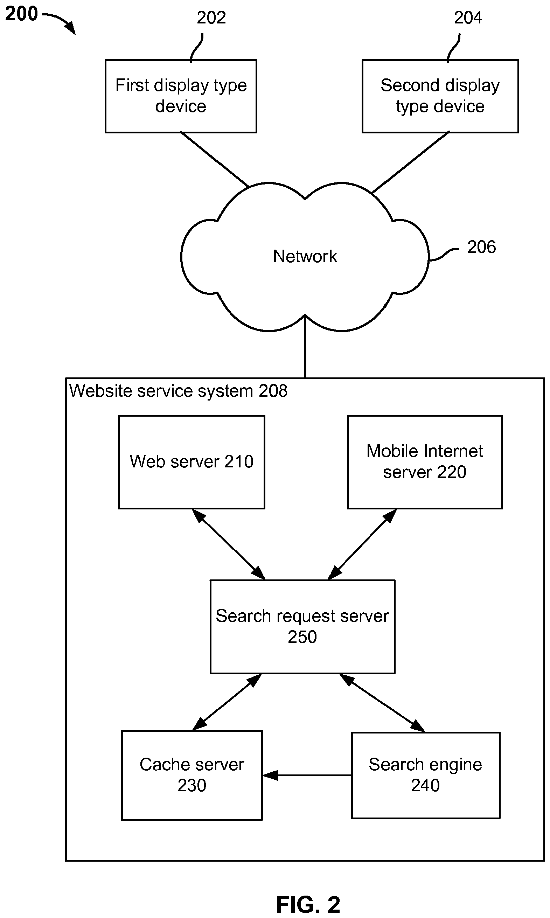

FIG. 2 is a diagram showing an example of a system for generating cache query requests. In the example, system 200 includes first display type device 202, second display type device 204, network 206, and website service system 208. Website service system 208 includes web server 210, mobile Internet server 220, cache server 230, search engine 240, and search request server 250. Network 206 includes high-speed data networks and/or telecommunications networks.

Website service system 208 is associated with operating a website at which a user can search for matching items. For example, the website comprises an e-commerce website at which a user can search for search results that comprise products. Users may access the website using devices associated with different display types. For example, a first display type is the page-by-page display type in which up to the maximum number of search results can be retrieved at once and displayed at a search results page. In the page-by-page display type, to retrieve the next page of search results associated with the same user query, the user can select a view next page selectable element on the currently displayed search results page. For example, a second display type is the cascade display type in which additional search results are dynamically loaded as a user scrolls further down to each new area of a search results page.

In some examples, one device may use multiple display types and may request search results associated with a particular display type depending on the source of the user query (e.g., the mobile or non-mobile type of web browser application and/or website for which the search results are requested). However, for purposes of illustration, in the example of FIG. 2, each of first display type device 202 and second display type device 204 is associated with using a different display type.

For example, the first display type of a page-by-page display is associated with non-mobile devices or with a non-mobile display format and the second display type of a cascade display is associated with mobile devices or with a mobile display format. In the example of system 200, first display type device 202 comprises a non-mobile device (e.g., a desktop computer) and/or includes a non-mobile web browser application that is configured to display search results for the website using the page-by-page technique, in which search results are retrieved for each search results page that is requested to be viewed by a user. Second display type device 204 comprises a mobile device (e.g., a smart phone, a tablet device) and/or includes a mobile web browser application that is configured to display search results for the website using the cascade technique, in which search results are dynamically loaded at a search results page in response to a user access (e.g., via scrolling down) to each new section of the search results page. However, in actual implementation, first display type device 202 and second display type device 204 may comprise any other pair of devices that are configured to use different display types. Furthermore, in actual implementation, display types other than page-by-page and cascade may be used by first display type device 202 and second display type device 204.

A user can use either first display type device 202 or second display type device 204 to access and submit a user query to the website. The user query is sent over network 206 and received at website service system 208. The user query includes query keywords input by the user and, in some examples, a display type identifier. In some examples, the display type identifier is generated by a non-mobile browser application executing at first display type device 202 that is used to display the search results. For example, if the user submitted the user query using (e.g., a web browser application executing at) first display type device 202, the user query received at website service system 208 would include the query keywords and an identifier associated with the page-by-page display. The user query may be sent as an HTTP request. For example, if the user submitted the user query using (e.g., a mobile application executing at) second display type device 204, the user query received at website service system 208 would include query keywords and an identifier associated with the cascade display. In some examples, the display type identifier is generated by a mobile browser application executing at second display type device 204 that is used to display the search results. For example, a display type identifier may comprise an HTTP header value. In some examples, website service system 208 can query (e.g., using Javascript) for the type (e.g., mobile or non-mobile) of browser application that is executing at first display type device 202 and/or second display type device 204 and is to be used to display the search results. The display type associated with the detected browser application may be determined based on the detected type (e.g., mobile or non-mobile) of browser application used.

Web server 210 is configured to receive a user query associated with an identifier associated with the page-by-page display and mobile Internet server 220 is configured to receive a user query associated with an identifier associated with the cascade display. Web server 210 is configured to generate a first display type specific search request associated with the page-by-page display technique. The first display type specific search request includes the query keywords from the user query, the starting position of the requested search results parameter, and the quantity of requested search results associated with the page-by-page display. Similarly, mobile Internet server 220 is configured to generate a second display type specific search request associated with the cascade display technique. The first display type specific search request includes the query keywords from the user query, the starting position of the requested search results parameter, and the quantity of requested search results associated with the cascade display. In various examples, the quantities of requested search results included in search requests associated with different display types are configured to be different and therefore, search requests associated with different display types are associated with different formats. For example, the quantity of requested search results associated with the page-by-page display comprises ten search results for each page of search results and the quantity of requested search results associated with the cascade display comprises five search results for the first loading of search results at a search results page and three search results for each subsequent loading of search results at the same search results page.

Search request server 250 is configured to receive the first display type specific search requests and the second display type specific search requests from web server 210 and mobile Internet server 220, respectively. Search request server 250 is configured to convert both first display type specific search requests and second display type specific search requests, which are associated with different formats, into query requests of a uniform format - cache query requests. Search request server 250 then uses a cache query request to query for corresponding search results stored in cache server 230 (e.g., search request server 250 queries whether search results corresponding to the cache query request are present in the cache) and in the event that the corresponding search results are not found in cache server 230, search request server 250 requests that search engine 240 conduct a search (e.g., in a database of search results) based on the cache query request to obtain the corresponding search results. Then, search request server 250 extracts the search results that correspond to the first/second display type specific search request from the obtained search results and sends them back to whichever one of web server 210 and mobile Internet server 220 that sent the search request on which the cache query request was based, so that the corresponding search results can send them back to the respective first display type device 202 or second display type device 204 from which the user query originated. Search request server 250 also stores the corresponding search results found for the cache query request in cache server 230 to be used for subsequent user queries. As will be described in further detail below, search request server 250 converts either a first display type specific search request or a second display type specific search request into a cache query request based at least in part on a configured cache granularity and as such, the search results stored in cache server 230 corresponding to each cache query request are stored with the same cache granularity.

Because a first display type specific search request and a second display type specific search request are associated with different parameters (e.g., different values for the quantity of requested search results), conventionally, using both first display type specific search requests and second display type specific search requests as index keys for search results stored in the same cache creates difficulty in allowing user queries associated with the two different display types to share the cached search results. As such, by converting each of a first display type specific search request and a second display type specific search request into a cache query request prior to using the request to query cache server 230, search request server 250 can use just cache query requests to query cache server 230 and to store as index keys of corresponding search results stored at cache server 230.

Cache server 230 uses a key-value index to organize cached content. In various examples, in the key-value index, each key comprises a cache query request and the value corresponding to the key comprises the corresponding search results found by search engine 240 using the query keywords parameter, the starting position parameter, and the quantity of requested search results parameter included in that cache query request.

Search request server 250 converts either a first display type specific search request or a second display type specific search request into a cache query request based at least in part on a configured cache granularity. In various embodiments, a "cache granularity" comprises a maximum quantity of search results that can be retrieved for each cache query request by a cache server with this particular cache granularity configuration. In some examples, a cache granularity is configured to be used with a particular cache server (e.g., cache server 230). In some examples, a cache granularity is configured to be used with multiple cache servers. In some examples, the cache granularity can be configured by a computer program or by a system administrator. A cache query request generated based on a first display type specific search request or a second display type specific search request includes the same query keywords as the first display type specific search request or the second display type specific search request. In various examples, the starting position parameter of a cache query request is determined based at least in part on the configured cache granularity and the starting position parameter of the first display type specific search request or the second display type specific search request. In various examples, the quantity of requested search results parameter of a cache query request is determined based at least in part on the cache granularity.

In one example of determining the starting position parameter and the quantity of requested search results parameter for a cache query request from the corresponding parameters of a first or second display type specific search request, the quantity of requested search results in the cache query request is determined based on the quantity specified by the cache granularity. The starting position parameter in the cache query request is determined according to the quantity specified by the cache granularity and the starting position parameter in the first/second display type specific search request. Specifically, the starting position parameter in the cache query request can be set to be a value that is 1) a multiple of the quantity specified by the cache granularity, 2) less than or equal to the starting position parameter of the first/second display type specific search request, and 3) when added together with the quantity specified by the cache granularity, the sum is greater than or equal to the starting position of the first/second display type specific search request. For example, the starting position parameter can be adjusted to equal to the product of a positive integer (0, 1, 2, 3, and so forth) and the quantity specified by the cache granularity.

If search results corresponding to the cache query request are present in cache server 230, the search results corresponding to the cache query request are acquired from cache server 230 by search request server 250. Then, the search results corresponding to those requested by the first or second display type specific search request on which the cache query request was based are extracted from these search results and sent back to whichever one of web server 210 or mobile Internet server 220 that had sent the respective first or second display type specific search request. The recipient of whichever web server 210 or mobile Internet server 220 sends the search results back to first display type device 202 or second display type device 204, respectively.

If search results corresponding to the cache query request are not present in the cache server 230, then search request server 250 requests that search engine 240 conduct a search based on the cache query request in order to obtain the corresponding search results. Then the search results that correspond to the first or second display type specific search request on which the cache query request was based are extracted from the obtained search results and sent back to whichever one of web server 210 or mobile Internet server 220 that had sent the respective first or second display type specific search request. The recipient of whichever web server 210 or mobile Internet server 220 sends the search results back to first display type device 202 or second display type device 204, respectively. Search request server 250 also stores the corresponding search results obtained for the cache query request to cache server 230 for use by subsequent cache query requests. As such, all cache query requests associated with search results stored in cache server 230 include the same quantity of requested search results parameter (because they are all set to the quantity specified by the cache granularity), regardless whether the cache query request was generated from a first display type specific search request generated by web server 210 based on a user query from first display type device 202 or generated from a second display type specific search request generated by mobile Internet server 220 based on a user query from second display type device 204.

As described herein by converting different display type specific search requests into cache query requests, which are used to store search results at and retrieve search results from a cache, it is possible to increase the cache hit rate, reduce the number of search engine visits, shorten search processing time, and enhance overall user experience. Increasing the cache hit rate will improve search processing times because returning search results associated with a cache hit is generally more efficient than returning search results associated with a cache miss (e.g., which includes requesting a search engine to perform a search).

The system architecture of the website service system described in FIG. 2 is merely an example. The present application is not limited to this. The functionalities of the website service system as described in FIG. 2 may be realized in any form in any appropriate server system. For example, although the example of FIG. 2 describes a search request server, the functionalities of the search request server may be integrated into another module of the website service system, such as a web server, a mobile Internet server, a search engine server, and a cache server, for example. For example, the web server and/or mobile Internet server could be configured to convert first or second display type specific search requests into cache query requests and complete exchanges with the cache server and search engine server in order to implement the cache queries and search result extractions that are described herein. In another example, the search engine server could be configured to convert first or second display type specific search requests into cache query requests and complete exchanges with the cache server in order to implement cache queries and search result extractions. In yet another example, the cache server could be configured to convert search requests into cache query requests and complete cache queries and exchanges with the search engine in order to extract search results. In addition, the website service system could be configured to include, in addition to the mobile Internet server for the cascade display type and a web server for the page-by-page display type, other servers of configured to use with any other display type. In addition, although the cache server in the architecture presented above functions as a separate component of the website service system, the cache server can also be integrated with the web server, the mobile Internet server, and/or the search engine server, for example.

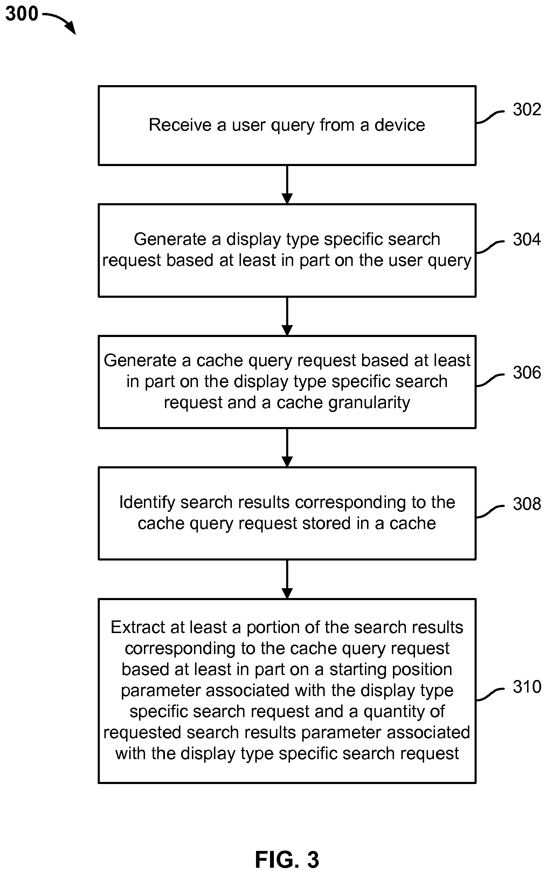

FIG. 3 is a flow diagram showing an embodiment of a process for generating cache query requests. In some examples, process 300 is implemented at system 200 of FIG. 2. Specifically, in some examples, process 300 is implemented at website service system 208 of system 200 of FIG. 2.

At 302, a user query is received from a device. For example, a user may access a website using a device and submit one or more query keywords via a search input window. The user query may be generated from a web browser application executing at a non-mobile device such as a laptop or desktop computer. The user query may be generated from a mobile application executing at a mobile device such as a smart phone or a tablet device. For example, the application executing at the device from which the user query was sent may be configured to use the page-by-page display type, the cascade display type, or any other appropriate display type.

The user query includes the query keywords submitted by the user and, in some examples, also the identifier of the search results display type used by the device on which it was generated and/or the browser application executed on the device on which the user query was generated. For example, in response to a search query submitted by a user via a web browser application executing at a non-mobile device that uses the page-by-page display type, the query can be generated to include an identifier associated with page-by-page display. Also, for example, in response to a search query submitted by a user via a mobile application executing at a mobile device that uses the cascade display type, the query can be generated to include an identifier associated with cascade display. In some examples, the website service system detects the display type identifier associated with the user query based at least in part on querying for the type (e.g., mobile or non-mobile) of browser application executing at the device that generated the user query.

At 304, a display type specific search request is generated based at least in part on the user query. A different search request is generated based on the display type associated with the user query. For example, a search request associated with a page-by-page specific format is generated based on a user query associated with the page-by-page display type identifier and a search request associated with a cascade specific format is generated based on a user query associated with the cascade display type identifier.

A display type specific search request may include at least a query keyword parameter, a starting position for requested search results parameter, and a quantity of requested search results parameter. In various examples, a starting "position" parameter refers to a position of the first search result that is to be returned within a sequence (e.g., of ordered rows in a database table or of ranking of search results). Because user actions subsequent to displaying an initial set of search results in response to a user query can cause more search results to be obtained for the same user query, multiple display type specific search results can therefore be generated for the same user query. For example, in a page-by-page display of results, after the first page of search results is obtained and displayed for the user at the requesting device, the user may select to view the next page of search results and so another page-by-page specific search request is to be generated to retrieve the additional search results for the same user query. Similarly, for example, in a cascade display of results, after the initial loading of search results is obtained and displayed for the user at the requesting device, the user may scroll further down the search results page to view the next loading of search results and so another cascade specific search request is to be generated to retrieve the additional search results for the same user query.

The values of the parameters of the display type specific search request is described in more detail below:

In various examples, the value of the query keyword parameter of the display type specific search request is set to be the query keywords of the user query.

In various examples, the value of the quantity of requested search results parameter is set to a value associated with the display type identifier associated with the user query and/or any user actions with respect to the search results pages. For example, the maximum number of search results that each page is able to display is ten in the page-by-page display type. Therefore, a page-by-page specific search request would include a quantity of requested search results parameter that is set to ten, regardless of which (e.g., first, second, third, etc.) page of search results is being acquired. For example, the maximum number of search results that can be loaded for an initial loading of search results at a search results page in the cascade display is five and the maximum number of search results that can be loaded at the search results page for each loading of search results subsequent to the first loading is three. Therefore, a cascade specific search request would include a quantity of requested search results parameter that is set to five for the initial loading of search results for the user query and would include a quantity of requested search results parameter that is set to three for each subsequent loading of search results for the same user query.

For example, the user query keywords included in a user query are "apple iphone4." If the user query is associated with the identifier associated with the page-by-page display type, the maximum number of search results that each page is able to display is ten. Thus, the page-by-page specific search request that is generated can be recorded as: "q=apple iphone4&s=0&n=10," where q is the user query keywords, s is the starting position of the search results that are requested to be returned, and n is the quantity of search results that is requested to be returned. If the user query is associated with the identifier associated with the cascade display type, the maximum number of search results that can be loaded for an initial loading of search results at a search results page is five (and the maximum number of search results that can be loaded for each loading of search results subsequent to the first loading at the search results page is three). Thus, the cascade specific search request corresponding to the first loading of search results can be recorded as "q=apple iphone4&s=0&n=5," where q is the user query keywords, s is the starting position of the search results that are requested to be returned, and n is the quantity of search results that is requested to be returned. As shown in this case, search requests generated based on user queries associated with different display types may include different values for the same parameters.

In various examples, the value of the starting position for requested search results parameter is set to "0" or whichever value is the default starting position value of search results in a first display type specific search request generated for a user query. Then, for each subsequent display type specific search request that is generated for the same user query in response to a user action associated with the displayed search results page (e.g., a user selection to view the next page of search results or the user scrolling down the search results page to receive an additional loading of search results), the value of the starting position for requested search results parameter is set to the sum of the value of the starting position for requested search results parameter from the immediately previous display type specific search request and the value of the quantity of requested search results parameter from the immediately previous display type specific search request. For example, for a first page-by-page specific search request generated for a user query, the value of the starting position for requested search results parameter is set to "0" and for a second page-by-page specific search request generated for the same user query, the value of the starting position for requested search results parameter is set to "10." Similarly, for example, for a first cascade specific search request generated for a user query, the value of the starting position for requested search results parameter is set to "0" and for a second cascade specific search request generated for the same user query, the value of the starting position for requested search results parameter is set to "5."

At 306, a cache query request is generated based at least in part on the display type specific search request and a cache granularity. In various examples, different display specific search requests are standardized by being converted into cache query requests based on a configured cache granularity. As a result, search requests with different formats are converted into a uniform format and may therefore share the search results stored in the cache and increase the cache hit rate.

As described with 304, above, multiple display type specific search requests may be generated for the same user query and a corresponding cache query request as described with 306 can be generated for each of such display type specific search requests.

In various examples, a cache granularity specifies a maximum quantity of search results that can be retrieved for each cache query request. In some examples, a cache granularity is configured to be used with a particular cache server or multiple cache servers. Different display type specific search requests may be converted into cache query requests according to a uniform cache granularity.

A cache query request includes at least a query keywords parameter, a starting position of the requested search results parameter, and a quantity of requested search results parameter. The values of the parameters of the cache query request is described in more detail below:

The value of the query keywords parameter of the cache query request comprises the query keywords of the display type specific search request.

The value of the quantity of requested search results parameter in the cache query request is determined based on the quantity specified by the cache granularity. Specifically, for example, the value of the quantity of requested search results parameter in the cache query request can be set to the quantity specified by the cache granularity.

The value of the starting position parameter in the cache query request is determined based on the quantity specified by the cache granularity and the starting position parameter in the display type specific search request. Specifically, for example, the value of the starting position parameter in the cache query request can be 1) a multiple of the cache granularity, 2) less than or equal to the starting position parameter in the display type specific search request, and 3) when added to the quantity specified by the cache granularity, the sum is greater than or equal to the value of the starting position parameter in the display type specific search request. For example, assume that the quantity specified by the cache granularity is 20. In this example, the starting position parameter in the cache query request could be 0, 20, 40, or 60. Furthermore, assume that the query keywords in the display type specific search request are "apple iphone4," the initial starting position parameter for the requested search results is 50, and the quantity of requested search results is 5. The display type specific search request can be recorded as "q=apple iphone4&s=50&n=5." According to the display type specific search request, search results at positions 51 through 55 are requested to be returned to the user. In this example, the cache query request generated based on the display type specific search request can be expressed as "q=apple iphone4&s=40&n=20." That is, the cache query request queries whether the cache has the relevant search results at positions 41 through 60. As can be shown by the cache query request of this example, the quantity of search results to be requested, n, can be set to equal the quantity, 20, specified by the cache granularity.

In some examples, the cache granularity can be configured by a computer program or by a system administrator. In some examples, the cache granularity can be configured based on historical user behavior information. Historical user behavior information can include statistical information on user access actions such as user search actions, view next page user selection actions, and scroll-down loading user actions at the website, for example. In some examples, the historical user behavior information used to configure the cache granularity is specific to the user associated with submitting the current user query and therefore includes historical user behavior information tracked for that user. In some examples, the historical user behavior information used to configure the cache granularity is not specific to the user associated with submitting the current user query and therefore includes historical user behavior information tracked for various users. For example, with regard to a type of query keyword, a user (or users, depending on whether the historical user behavior information used is user specific or general to various users) might favor selecting to view multiple pages of search results. Thus, a quantity of search results that can be displayed across multiple pages may be directly requested during the first page search request so that subsequent page search requests can be conveniently satisfied with the search results already stored in the cache. Therefore, such statistical information can be used as a basis for configuring the cache granularity. For example, the cache granularity can be set as a multiple of the quantity of search results that can be displayed at one search results page to raise cache hit rates. Setting the cache granularity as a multiple of the quantity of search results that can be displayed at one search results page is particularly suited to optimizing the processing of search requests in a single display technique.

In another specific example, the cache granularity can be set on the basis of the number of requested search results in different search requests relating to different display techniques. To enable different display type specific search requests to be able to efficiently share the contents stored at the cache, in various examples, the cache granularity is configured to be a quantity that is greater than or equal to the largest quantity of requested search results parameters among the different display type specific search requests. For example, the cache granularity can be set to be a multiple of the largest of the quantity of requested search results parameters among the different display type specific search requests. For example, assume that the display quantity per page under the page-by-page technique is ten and a display quantity per loading under the cascade technique is three. Then the quantity of the cache granularity can be configured to a multiple of the 10, i.e., 10, 20, 30, and so forth.

For example, the page-by-page display type was used to display search results retrieved for a user that submitted a user query that included the query keywords of "apple iphone4" in a first period of time, and the cascade display type was used to display search results retrieved for the same user or a different user that submitted a user query that included the same query terms of "apple iphone4" in a later period of time. The device that used the page-by-page display type performs the operation of first displaying the first page search results and then receiving a user selection to view the second page search results. The device that used the cascade display type loads successive sets of search results in response to a user's actions of scrolling further down the page of search results. As a result of the user interactions with the displayed search results as described above during the page-by-page and cascade displays of search results, the cache server as described herein can save content as shown in Table 2, below. In this example, the cache granularity is set to 20 and each search result comprises a product.

**Table 2**

| **Sequence of user actions** | **Description of user action** | **Search request** | **Cache query request** | **Result of using the cache query request to query the cache** |
|---|---|---|---|---|
| 1 | Page-by-page: first page of search results | q=apple iphone4&s=0 &n=10 | q=apple iphone4&s=0&n=20 | No cache hits; the search engine is caused to obtain 18 products; the first ten of the 18 products are sent back to the device. The cache query request and the corresponding 18 products are stored as a key-value pair in the cache. |
| 2 | Page-by-page: second page of search results | q=apple iphone4&s=1 0&n=10 | q=apple iphone4&s=0&n=20 | Cache hit; products 11-18 are extracted from the 18 cached products and sent back to the device. |
| 3 | Cascade: first loading | q=apple iphone4&s=0 &n=5 | q=apple iphone4&s=0&n=20 | Cache hit; products 1-5 are extracted from the 18 cached products and sent back to the device. |
| 4 | Cascade: second loading | q=apple iphone4&s=5 &n=3 | q=apple iphone4&s=0&n=20 | Cache hit; products 6-8 are extracted from the 18 cached products and sent back to the device. |
| 5 | Cascade: third loading | q=apple iphone4&s=8 &n=3 | q=apple iphone4&s=0&n=20 | Cache hit; products 9-11 are extracted from the 18 cached products and sent back to the device. |

It is clear from the example in Table 2, above, that the five accesses associated with different display types and also different search requests required only one search engine request and one cached key-value (the key comprising the cache query request "q=apple iphone4&s=0&n=20" and the value comprising the corresponding products 1 through 18) pair.

After the first access (the page-by-page user action to view the first page of search results) of this example, the cache server saves the key-value pair as shown in Table 3, below:

**Table 3**

| **Key** | **Value** |
|---|---|
| q=apple iphone4&s=0&n=20 | "Product 1, Product 2, Product 3, Product 4, Product 5, Product 6, Product 7, Product 8, Product 9, Product 10, Product 11, Product 12, Product 13, Product 14, Product 15, Product 16, Product 17, Product 18" |

Therefore, setting the quantity of the cache granularity to a multiple of the largest quantity of requested search results across different display type specific search requests enables the cache hit rate to improve and the number of search engine searches to decrease.

As shown in the examples associated with Tables 2 and 3, there may be fewer available search results that can be acquired than the specified quantity of requested search results in the cache query request. For example, fewer than the quantity specified by the quantity of requested search results in the cache query request may be actually acquired by a search engine in the event that there are a fewer number of available matching search results than the specified quantity of requested search results in the cache query request. For example, in the examples given in Tables 2 and 3, the quantity of search results that could actually be acquired is 18, which is less than the quantity of requested search results parameter (n = 20) in the cache query request. Therefore, in these examples, the cache granularity is used to limit the permitted cache storage quantity of search results corresponding to each cache query request, but it is not necessarily equal to the quantity of search results that is actually stored in the cache corresponding to each cache query request. As such, in various examples, the quantity of search results corresponding to each cache query request that is actually stored in the cache is less than or equal to the cache granularity.

A larger cache granularity may not always be desired. The following is a description of an experimental analysis that tests the effects of using a larger cache granularity. It is assumed that the search engine processing time is generally greater than the cache processing time. The search engine processing time is related to "s+n" while the cache processing time is generally constant. Using the example as described above with Table 3, the search engine processing time and the cache server processing time corresponding to each search request are as shown in Table 4, below.

**Table 4**

| **Search request** | **Search engine processing time** | **Cache server processing time** |
|---|---|---|
| q=apple iphone4&s=0&n=10 | 10ms | 1ms |
| q=apple iphone4&s=10&n=10 | 15ms | 1ms |
| q=apple iphone4&s=0&n=20 | 15ms | 1ms |
| q=apple iphone4&s=0&n=5 | 5ms | 1ms |
| q=apple iphone4&s=5&n=3 | 6ms | 1ms |
| q=apple iphone4&s=8&n=3 | 7ms | 1ms |

Assume that user access search pattern 1 is: 100 instances of page-by-page user actions to view the first page, 50 instances of page-by-page user actions to view the second page, 80 instances of cascade first loading, 60 instances of second loading, and 20 instances of third loading. The total processing times when cache granularity is 10 or 20 are as shown in Table 5, below:

**Table 5**

| **Cache granularity** | **Total processing time (in ms)** | **Calculation technique (in ms)** |
|---|---|---|
| 10 | (100*12)+(50*17)+(80*1)+(60 *1)+(20*2) = 2230 | Page-by-page user action to view the first page: 1+10+1 |
| | | Page-by-page user action to view the |
| | | second page: 1+15+1 |
| | | Cascade first loading: 1 |
| | | Cascade second loading: 1 |
| | | Cascade third loading: 1+1 |
| 20 | (100*17)+(50*1)+ (80*1)+(60*1)+(20*1) = 1910 | Page-by-page user action to view the first page: 1+15+1 |
| | | Page-by-page user action to view the second page: 1 |
| | | Cascade first loading: 1 |
| | | Cascade second loading: 1 |
| | | Cascade third loading: 1 |

For user access search pattern 1, the preferred granularity is 20 because it results in a lower processing time.

Assume that user access search pattern 2 is: 100 instances of page-by-page user actions to view the first page, 20 of page-by-page user actions to view the second page, 80 instances of cascade first loading, 60 instances of second loading, and 20 instances of third loading. The total processing times when cache granularity is 10 or 20 are as shown in Table 6, below:

**Table 6**

| **Cache granularity** | **Total processing time (in ms)** | **Calculation technique (in ms)** |
|---|---|---|
| 10 | (100*12)+(20*17)+(80*1)+(60*1) +(20*2)=1720 | Page-by-page user action to view the first page: 1+10+1 |
| | | Page-by-page **user** action to view |
| | | the second page: 1+15+1 |
| | | Cascade first loading: 1 |
| | | Cascade second loading: 1 |
| | | Cascade third loading: 1+1 |
| 20 | (100*17)+(20*1)+ (80*1)+(60*1)+(20*1)=1880 | Page-by-page user action to view the first page: 1+15+1 |
| | | Page-by-page user action to view the second page: 1 |
| | | Cascade first loading: 1 |
| | | Cascade second loading: 1 |
| | | Cascade third loading: 1 |

For user access search pattern 2, the preferred granularity is 10 because it leads to a lower processing time.

Therefore, to optimize system performance, factors that may be considered in configuring the cache granularity settings include one or more of: the search engine processing time, the cache server processing time, and historical user search access patterns.

The quantity of requested search results in display type specific search requests (prior to being converted into cache query requests) can also be configured based on various factors e.g., the search engine processing time, the cache server processing time, and historical user search access patterns. In some examples, the parameters of quantities of requested search results in different display type specific search requests are configured such that the largest such parameter among them is a multiple of each of the other parameters. Specifically, by reasonably selecting the quantity of requested search results to be displayed at a page of search results in the page-by-page display type or the quantity of requested search results to be displayed for a first loading in the cascade display type, the largest quantity among them can always be a multiple of each of the other quantities. In this way, the access frequency to the cache can be reduced. As in the example above, ten products are displayed per page with the page-by-page display type and three products per loading with the cascade display type. Therefore, in the cascade display type, products 10-12 can be acquired for the fourth loading. As such, the cache needs to be accessed twice. But if ten products are displayed per page with the page-by-page display type and five products are loaded each time with the cascade display type, then the cache will need to be accessed only once. Therefore, the cache access frequency can be further reduced by configuring the quantities of requested search results for various different display type specific search requests as described above.

At 308, search results corresponding to the cache query request stored in a cache are identified. In various examples, the cache indexes stored content using the key-value pair technique, in which each key comprises a cache query request and the corresponding value comprises the search results previously acquired by a search engine using that cache query request. Therefore, the cache may be queried by comparing the current cache query request to the stored keys associated with the cache. In the event there is a matching key and there is therefore a cache hit, the search results corresponding to the matching cache query request are identified in the cache. Returning to the example associated with Table 2, above, the page-by-page user action to view the second page of search results is associated with the cache query request of "q=apple iphone4&s=0&n=20." At this point, as can be seen in Table 3, above, the search results corresponding to this cache query request were already stored in the cache during the first access (the page-by-page user action to view the first page of search results). Therefore, the search results corresponding to the cache query request of "q=apple iphone4&s=0&n=20" can be looked up in the cache for the second user action.

At 310, at least a portion of the search results corresponding to the cache query request is extracted based at least in part on a starting position parameter associated with the display type specific search request and a quantity of requested search results parameter associated with the display type specific search request. After the search results corresponding to the cache query request are obtained from the cache, the appropriate search results relevant to the display type specific search request on which the cache query request is based are extracted based at least in part on the starting position parameter and the quantity of requested search results parameter of the display type specific search request. The extracted search results are sent back to the (e.g., mobile or non-mobile) device from which the user query was received.

Returning to the example associated with Table 2, above, the page-by-page user action to view the second page of search results is associated with the cache query request of "q=apple iphone4&s=0&n=20." The search results corresponding to the cache query request "q=apple iphone4&s=0&n=20" in the cache (as shown in Table 3, above) are "Product 1, Product 2, Product 3, Product 4, Product 5, Product 6, Product 7, Product 8, Product 9, Product 10, Product 11, Product 12, Product 13, Product 14, Product 15, Product 16, Product 17, Product 18." Based at least in part on the starting position parameter (s = 10) for the requested search results and the quantity (n = 10) of requested search results in the display type specific search request, "q=apple iphone4&s=10&n=10," it is possible to extract the subset of the search results ("Product 11, Product 12, Product 13, Product 14, Product 15, Product 16, Product 17, Product 18") corresponding to the display type specific search request from the identified cached search results and send them back to the device from which the user query was sent.

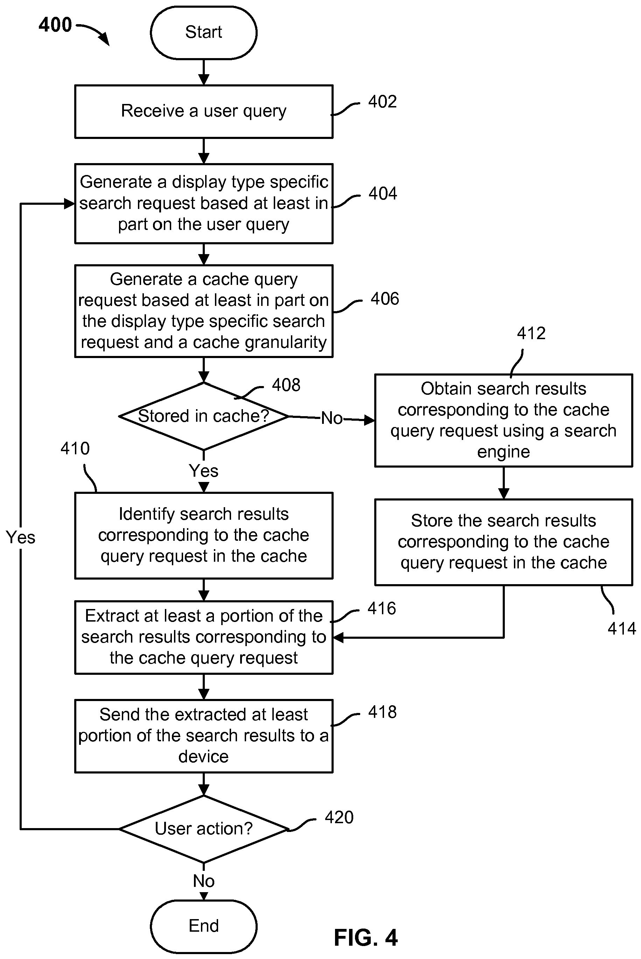

FIG. 4 is a diagram showing an example of a process of generating cache query requests. In some examples, process 400 is implemented at system 200 of FIG. 2. Specifically, in some examples, process 400 is implemented at website service system 208. In some examples, process 300 of FIG. 3 is implemented at least in part using process 400.

At 402, a user query is received. Step 402 can be implemented in a similar manner to 302 of process 300 of FIG. 3.

At 404, a display type specific search request is generated based at least in part on the user query. Step 404 can be implemented in a similar manner to 304 of process 300 of FIG. 3. As described above with 304 of process 300 of FIG. 3, one or more display type specific search requests may be generated corresponding to the same user query and the starting position parameter and/or the quantity of requested search results parameter may be updated for each subsequent display type specific search request generated based on the same user query.

At 406, a cache query request is generated based at least in part on the display type specific search request and a cache granularity. Step 406 can be implemented in a similar manner to 306 of process 300 of FIG. 3.

At 408, it is determined whether search results corresponding to the cache query request are stored in a cache. In the event that the search results corresponding to the cache query request are found stored in the cache (i.e., in the event of a cache hit), control is transferred to 410. Otherwise, in the event that the search results corresponding to the cache query request are not found stored in the cache (i.e., in the event of a cache miss), control is transferred to 412. The cache is configured to index stored content using the key-value pair technique. As such, the cache may be queried by comparing the current cache query request to the stored keys associated with the cache. In the event there is a matching key and there is therefore a cache hit, the search results corresponding to the matching cache query request are identified in the cache. Otherwise, in the event there is no matching key and there is therefore a cache miss, the search results corresponding to the current cache query request are not present in the cache.

At 410, search results corresponding to the cache query request stored in the cache are identified. The search results corresponding to the current query request that are stored in the cache are identified. Step 410 can be implemented in a similar manner to 308 of process 300 of FIG. 3.

At 412, search results corresponding to the cache query request are obtained using a search engine. A search engine can be requested to conduct a search to find search results that match the query keywords included in the cache query request and to return a number of search results up to the quantity of requested search results included in the cache query request. As described above, the quantity of requested search results included in the cache query request can be equal to the quantity specified by the configured cache granularity. However, the quantity of search results matching the query keywords included in the cache query request may be less than or equal to the quantity specified by the cache granularity depending on the availability of matching results that can be obtained by the search engine.

At 414, the obtained search results corresponding to the cache query request are stored in the cache. The cache query request and the search results corresponding to the cache query request obtained using the search engine are stored at the cache as a key-value pair in the index.

At 416, at least a portion of the search results corresponding to the cache query request is extracted. At least a subset of the search results corresponding to the cache query request that are relevant to the display type specific search request is extracted based at least in part on a starting position parameter associated with the display type specific search request and a quantity of requested search results associated with the display type specific search request. Step 416 can be implemented in a similar manner to 310 of process 300 of FIG. 3. In some other embodiments, in the event that there is a cache miss and the search results corresponding to the cache query request are obtained using the search engine, the extraction of step 416 may be performed before or at least partially concurrently to storing the search results in the cache of step 414.

At 418, the at least extracted portion of the search results corresponding to the cache query request is sent to a device associated with user query.

At 420, it is determined whether a user action configured to cause another display type specific search request corresponding to the user query to be generated has been performed. Because user actions subsequent to displaying an initial set of search results in response to a user query can cause more search results to be obtained for the same user query, multiple display type specific search results can therefore be generated for the same user query. For example, in a page-by-page display of results, after the first page of search results is obtained and displayed for the user at the requesting device, the user may select to view the next page of search results and so another page-by-page specific search request is to be generated to retrieve the additional search results. Similarly, for example, in a cascade display of results, after the initial loading of search results is obtained and displayed for the user at the requesting device, the user may scroll further down the search results page to view the next loading of search results and so another cascade specific search request is to be generated to retrieve the additional search results. In the event that such a user action has been performed, control is returned to 404. Otherwise, in the event that no such user action has been performed, process 400 ends.

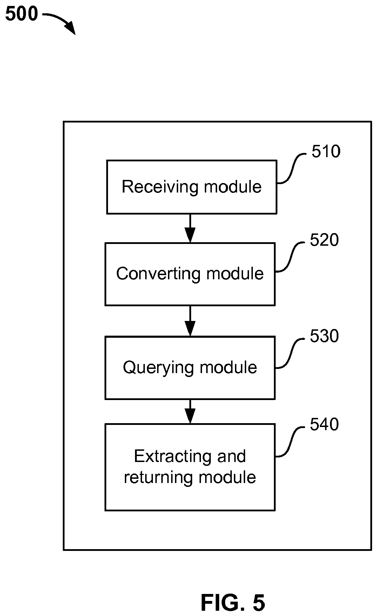

FIG. 5 is a diagram showing an embodiment of a system for generating cache query requests. In the example, system 500 includes receiving module 510, converting module 520, querying module 530, and extracting and returning module 540.

The modules can be implemented as software components executing on one or more processors, as hardware such as programmable logic devices, and/or Application Specific Integrated Circuits designed to elements can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The modules may be implemented on a single device or distributed across multiple devices.

Receiving module 510 is configured to receive user queries from devices. In various embodiments, receiving module 510 is configured to generate a display type specific search request based on each received user query. Converting module 520 is configured to convert display type specific search requests into cache query requests according to a configured cache granularity. Querying module 530 is configured to look up search results corresponding to cache query requests in the cache by comparing the cache query requests to keys stored for the cache. Extracting and returning module 540 is configured to extract search results relevant to the display type specific search request from the search results corresponding to the cache query request.

In the event that there is no key stored for the cache that matches the cache query request, querying module 530 is further configured to obtain search results corresponding to the cache query request from a search engine and store the search results corresponding to the cache query request in the cache.

In various examples, a display type specific search request includes at least a query keyword parameter, a starting position of the requested search results parameter, and a quantity of requested search results parameter. In various examples, a cache query request includes at least a query keyword parameter set to the query keywords of the user query, a starting position of the requested search results parameter set based on the starting position included in the display type specific search request and the cache granularity, and a quantity of requested search results parameter determined based on the cache granularity. In some examples, the starting position parameter in the cache query request is set to a multiple of the cache granularity, is less than or equal to the starting position parameter in the display type specific search request, and when added to the starting position included in the display type specific search request, the sum is greater than or equal to the starting position parameter in the display type specific search request. In some examples, the quantity of requested search results in the cache query request is set to the quantity specified by the cache granularity.

In some examples, the cache granularity can be configured based on the number of requested search results in different display type specific search requests. In some examples, the cache granularity can be set based on a multiple of the largest of the quantities of requested search results across different display type specific search requests. In some examples, the quantities of requested search results in different display type specific search requests are set such that the largest one among them is always a multiple of each of the other quantities.

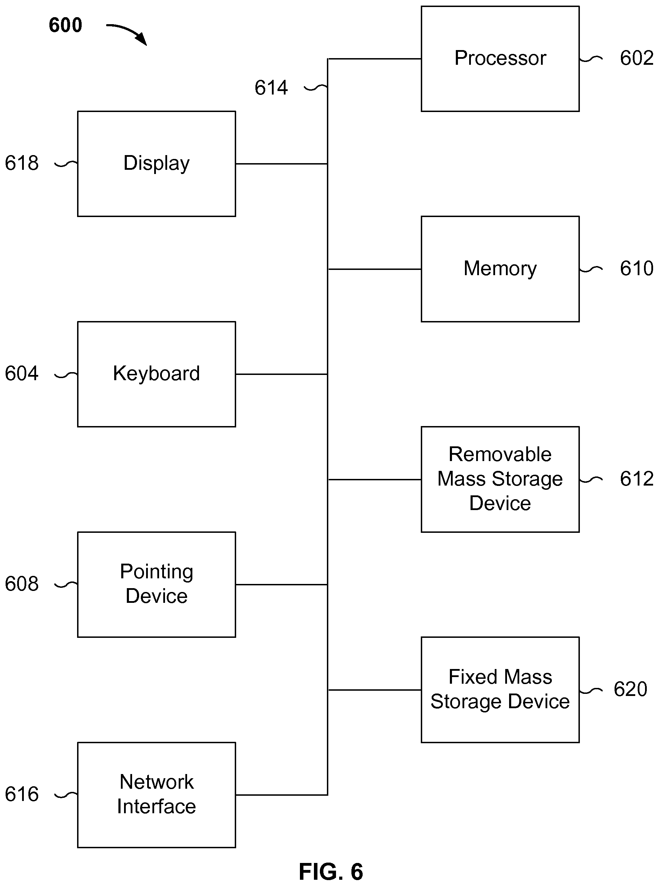

FIG. 6 is a functional diagram illustrating an example of a programmed computer system for implementing the generation of cache query requests. As will be apparent, other computer system architectures and configurations can be used to determine message data to present based on a message. Computer system 600, which includes various subsystems as described below, includes at least one microprocessor subsystem (also referred to as a processor or a central processing unit (CPU)) 602. For example, processor 602 can be implemented by a single-chip processor or by multiple processors. In some examples, processor 602 is a general purpose digital processor that controls the operation of the computer system 600. Using instructions retrieved from memory 610, the processor 602 controls the reception and manipulation of input data, and the output and display of data on output devices (e.g., display 618). In some examples, processor 602 includes and/or is used to provide the generation of cache query requests.

Processor 602 is coupled bi-directionally with memory 610, which can include a first primary storage area, typically a random access memory (RAM), and a second primary storage area, typically a read-only memory (ROM). As is well known in the art, primary storage can be used as a general storage area and as scratch-pad memory, and can also be used to store input data and processed data. Primary storage can also store programming instructions and data, in the form of data objects and text objects, in addition to other data and instructions for processes operating on processor 602. Also as is well known in the art, primary storage typically includes basic operating instructions, program code, data, and objects used by the processor 602 to perform its functions (e.g., programmed instructions). For example, memory 610 can include any suitable computer readable storage media, described below, depending on whether, for example, data access needs to be bi-directional or uni-directional. For example, processor 602 can also directly and very rapidly retrieve and store frequently needed data in a cache memory (not shown).

A removable mass storage device 612 provides additional data storage capacity for the computer system 600 and is coupled either bi-directionally (read/write) or uni-directionally (read only) to processor 602. For example, storage 612 can also include computer readable media such as magnetic tape, flash memory, PC-CARDS, portable mass storage devices, holographic storage devices, and other storage devices. A fixed mass storage 620 can also, for example, provide additional data storage capacity. The most common example of fixed mass storage 620 is a hard disk drive. Mass storage 612, 620 generally store additional programming instructions, data, and the like that typically are not in active use by the processor 602. It will be appreciated that the information retained within mass storage 612 and 620 can be incorporated, if needed, in standard fashion as part of memory 610 (e.g., RAM) as virtual memory.

In addition to providing processor 602 access to storage subsystems, bus 614 can also be used to provide access to other subsystems and devices. As shown, these can include a display 618, a network interface 616, a keyboard 604, and a pointing device 608, as well as an auxiliary input/output device interface, a sound card, speakers, and other subsystems as needed. For example, the pointing device 608 can be a mouse, stylus, track ball, or tablet, and is useful for interacting with a graphical user interface.

The network interface 616 allows processor 602 to be coupled to another computer, computer network, or telecommunications network using a network connection as shown. For example, through the network interface 616, the processor 602 can receive information (e.g., data objects or program instructions) from another network or output information to another network in the course of performing method/process steps. Information, often represented as a sequence of instructions to be executed on a processor, can be received from and outputted to another network. An interface card or similar device and appropriate software implemented by (e.g., executed/performed on) processor 602 can be used to connect the computer system 600 to an external network and transfer data according to standard protocols. For example, various process examples disclosed herein can be executed on processor 602, or can be performed across a network such as the Internet, intranet networks, or local area networks, in conjunction with a remote processor that shares a portion of the processing. Additional mass storage devices (not shown) can also be connected to processor 602 through network interface 616.

An auxiliary I/O device interface (not shown) can be used in conjunction with computer system 600. The auxiliary I/O device interface can include general and customized interfaces that allow the processor 602 to send and, more typically, receive data from other devices such as microphones, touch-sensitive displays, transducer card readers, tape readers, voice or handwriting recognizers, biometrics readers, cameras, portable mass storage devices, and other computers.

In some examples, computing equipment comprises one or more processors (CPUs), input/output interfaces, network interfaces, and memory. Memory may include such forms as volatile storage devices in computer-readable media, random access memory (RAM) and/or nonvolatile memory, such as read-only memory (ROM) or flash memory (flash RAM). Memory is an example of a computer-readable medium.

Computer-readable media, including permanent and non-permanent media and removable and non-removable media, may achieve information storage by any technique or technology. Information can be computer-readable commands, data structures, program modules, or other data. Examples of computer storage media include but are not limited to phase-change memory (PRAM), static random access memory (SRAM), dynamic random access memory (DRAM), other types of random access memory, read-only memory (ROM), electrically erasable programmable read-only memory (EEPROM), flash memory, or other memory technology, CD-ROM, digital multifunction disc (DVD) or other optical storage, magnetic cassettes, magnetic tape or magnetic disc memory, or other magnetic storage equipment or any other non-transmission media that can be used to store information that is accessible to computers. As defined in this document, computer-readable media does not include transitory computer-readable media, such as modulated data signals and carrier waves.

A person skilled in the art should understand that the embodiment of the present application can be provided as techniques, systems or computer software products. Therefore, the present application may take the form of complete hardware embodiments, complete software embodiments, or embodiments that combine software and hardware. In addition, the present application can take the form of computer program products implemented on one or more computer-operable storage media (including but not limited to magnetic disk storage devices, CD-ROMs, and optical storage devices) containing computer operable program codes.

## Claims

1. A system (300; 400), comprising:
a receiving module (510) configured to:
receive (302; 402) a user query from a device (202; 204); and
generate (304; 404) a display type specific search request based at least in part on the user query;
a converting module (520) configured to generate (306; 406) a cache query request based at least in part on the display type specific search request and a cache granularity, wherein the converting module (520) is configured to convert a plurality of display type specific search requests associated with respective ones of a plurality of formats into one or more cache query requests that are associated with an uniform format, and wherein the cache granularity comprises a maximum quantity of search results that are to be retrieved corresponding to the cache query request;
a querying module (530) configured to identify search results (308; 410) corresponding to the cache query request stored in a cache; and
an extracting and returning module (540) configured to extract (310; 416) at least a portion of the search results corresponding to the cache query request based at least in part on a starting position parameter associated with the display type specific search request and a quantity of requested search results parameter associated with the display type specific search request.

2. The system of claim 1, wherein the user query includes one or more query keywords and a display type identifier associated with the device, the display type identifier comprising a page-by- page display type identifier.

3. The system of claim 1, wherein the user query includes one or more query keywords and a display type identifier associated with the device, the display type identifier comprising a cascade display type identifier.

4. The system of claim 1, wherein the extracting and returning module (540) is further configured to send (418) the extracted at a least portion of the search results corresponding to the cache query request to the device.

5. The system of claim 1, wherein the querying module (530) is further configured to:
determine (408) that the search results corresponding to the cache query request are not stored in the cache;
in response to the determination, use a search engine to obtain the search results (412) corresponding to the cache query request;
store (414) the cache query request as a key associated with the cache; and
store the search results corresponding to the cache query request as a value corresponding to the key associated with the cache.

6. A method, comprising:
receiving (302; 402) a user query from a device;
generating (304; 404) a display type specific search request based at least in part on the user query;
generating (306; 406) a cache query request based at least in part on the display type specific search request and a cache granularity, wherein the display type specific search request is associated with a first format and the cache query request is associated with a second format, wherein the first format is different from the second format, and wherein the cache granularity comprises a maximum quantity of search results that are to be retrieved corresponding to the cache query request;
identifying search results (308; 410) corresponding to the cache query request stored in a cache; and
extracting (310; 416), using one or more processors, at least a portion of the search results
corresponding to the cache query request based at least in part on a starting position parameter associated with the display type specific search request and a quantity of requested search results parameter associated with the display type specific search request.

7. The system of claim 1 or the method of claim 6, wherein generating the display type specific search request based at least in part on the user query includes:
determining a query keyword parameter associated with the display type specific search request based on one or more query keywords associated with the user query;
determining the starting position parameter associated with the display type specific search request based at least in part on a default starting position value; and
determining the quantity of requested search results parameter associated with the display type specific search request based at least in part on a configured quantity of requested search results associated with a display type identifier.

8. The system of claim 1 or the method of claim 6, wherein generating (306; 406) the cache query request based at least in part on the display type specific search request and the cache granularity includes:
determining a query keyword parameter associated with the cache query request based on one or more query keywords associated with the display type specific search request;
determining the starting position parameter associated with the cache query request based at least in part on the starting position parameter associated with the display type specific search request and the cache granularity; and
determining the quantity of requested search results parameter associated with the cache query request based at least in part on the cache granularity.

9. The system of claim 1 or the method of claim 8, wherein the starting position parameter associated with the cache query request comprises 1) a multiple of the cache granularity 2) less than or equal to the starting position parameter associated with the display type specific search request, and 3) when added to the cache granularity, the sum is greater than or equal to the starting position parameter associated with the display type specific search request.

10. The system of claim 1 or the method of claim 6, wherein identifying the search results (308; 410) corresponding to the cache query request stored in the cache comprises comparing the cache query request to stored keys associated with the cache.

11. The method of claim 6, further comprising sending (418) the extracted at least a portion of the search results corresponding to the cache query request to the device.

12. The method of claim 6, further comprising:
determining (408) that the search results corresponding to the cache query request are not stored in the cache;
in response to the determination, using a search engine to obtain the search results (412) corresponding to the cache query request;
storing the cache query request as a key associated with the cache; and
storing the search results (414) corresponding to the cache query request as a value corresponding to the key associated with the cache.

13. The system of claim 1 or the method of claim 6, wherein the cache granularity is configured based at least in part on historical user behavior information.

14. The system of claim 1 or the method of claim 6, wherein the cache granularity is configured based at least in part on a plurality of quantities of requested search results parameters associated with a plurality of display type specific search requests.

15. A computer program product, the computer program product comprising a non-transitory computer readable storage medium and comprising instructions for:
receiving (302; 402) a user query from a device;
generating (304; 404) a display type specific search request based at least in part on the user query;
generating (306; 406) a cache query request based at least in part on the display type specific search request and a cache granularity, wherein the display type specific search request is associated with a first format and the cache query request is associated with a second format, wherein the first format is different from the second format, and wherein the cache granularity comprises a maximum quantity of search results that are to be retrieved corresponding to the cache query request;
identifying (308; 410) search results corresponding to the cache query request stored in a cache; and
extracting (310; 416) at least a portion of the search results corresponding to the cache query request based at least in part on a starting position parameter associated with the display type specific search request and a quantity of requested search results parameter associated with the display type specific search request.

## Patentansprüche

1. System (300; 400), umfassend:
ein Empfangsmodul (510) konfiguriert zum:
Empfangen (302; 402) einer Benutzerabfrage von einem Gerät (202; 204); und
Erzeugen (304; 404) einer displaytypspezifischen Suchanforderung basierend zumindest zum Teil auf der Benutzerabfrage;
ein Konversionsmodul (520), das konfiguriert ist, eine Cache-Abfrageanforderung basierend zumindest zum Teil auf der displaytypspezifischen Suchanforderung und einer Cache-Granularität zu erzeugen (306; 406), wobei das Konversionsmodul (520) konfiguriert ist, eine Mehrzahl von displaytypspezifischen Suchanforderungen, die mit entsprechenden Anforderungen in einer Mehrzahl von Formaten assoziiert sind, in eine oder mehrere Cache-Abfrageanforderungen zu konvertieren, die mit einem einheitlichen Format assoziiert sind, und wobei die Cache-Granularität einen maximalen Umfang von Suchergebnissen umfasst, die entsprechend der Cache-Abfrageanforderung abgerufen werden sollen;
ein Abfragemodul (530), das konfiguriert ist, in einem Cache gespeicherte Suchergebnisse (308; 410) zu identifizieren, die der Cache-Abfrageanforderung entsprechen; und
ein Auslese- und Rückgabemodul (540), das konfiguriert ist, zumindest einen Teil der Suchergebnisse auszulesen (310; 416), die der Cache-Abfrageanforderung entsprechen basierend zumindest zum Teil auf einem Anfangspositionsparameter, der mit der displaytypspezifischen Suchanforderung assoziiert ist, und einem Parameter für den Umfang von angeforderten Suchergebnissen, der mit der displaytypspezifischen Suchanforderung assoziiert ist.

2. System nach Anspruch 1, wobei die Benutzerabfrage ein oder mehrere Abfragestichwörter und einen Displaytyp-Bezeichner, der mit dem Gerät assoziiert ist, einschließt, wobei der Displaytyp-Bezeichner einen Seite-für-Seite-Displaytyp-Bezeichner umfasst.

3. System nach Anspruch 1, wobei die Benutzerabfrage ein oder mehrere Abfragestichwörter und einen Displaytyp-Bezeichner, der mit dem Gerät assoziiert ist, einschließt, wobei der Displaytyp-Bezeichner einen Kaskaden-Displaytyp-Bezeichner umfasst.

4. System nach Anspruch 1, wobei das Auslese- und Rückgabemodul (540) weiterhin konfiguriert ist, die zumindest zum Teil ausgelesenen der Cache-Abfrageanforderung entsprechenden Suchergebnisse zum Gerät zu senden (418).

5. System nach Anspruch 1, wobei das Abfragemodul (530) weiterhin konfiguriert ist zum:
Bestimmen (408), dass die der Cache-Abfrageanforderung entsprechenden Suchergebnisse nicht im Cache gespeichert sind;
in Antwort auf die Bestimmung Benutzen einer Suchmaschine, um die der Cache-Abfrageanforderung entsprechenden Suchergebnisse (412) zu erhalten;
Speichern (414) der Cache-Abfrageanforderung als ein mit dem Cache assoziierter Schlüssel; und
Speichern der der Cache-Abfrageanforderung entsprechenden Suchergebnisse als ein Wert, der dem mit dem Cache assoziierten Schlüssel entspricht.

6. Verfahren, umfassend:
Empfangen (302; 402) einer Benutzerabfrage von einem Gerät;
Erzeugen (304; 404) einer displaytypspezifischen Suchanforderung basierend zumindest zum Teil auf der Benutzerabfrage;
Erzeugen (306; 406) einer Cache-Abfrageanforderung basierend zumindest zum Teil auf der displaytypspezifischen Suchanforderung und einer Cache-Granularität, wobei die displaytypspezifische Suchanforderung mit einem ersten Format assoziiert ist und die Cache-Abfrageanforderung mit einem zweiten Format assoziiert ist, wobei das erste Format vom zweiten Format verschieden ist, und wobei die Cache-Granularität einen maximalen Umfang von Suchergebnissen umfasst, die entsprechend der Cache-Abfrageanforderung abgerufen werden sollen;
Identifizieren von in einem Cache gespeicherten Suchergebnissen (308; 410), die der Cache-Abfrageanforderung entsprechen; und
Auslesen (310; 416) unter Verwendung eines oder mehrerer Prozessoren zumindest eines Teils der Suchergebnisse, die der Cache-Abfrageanforderung entsprechen basierend zumindest zum Teil auf einem Anfangspositionsparameter, der mit der displaytypspezifischen Suchanforderung assoziiert ist, und einem Parameter für den Umfang von angeforderten Suchergebnissen, der mit der displaytypspezifischen Suchanforderung assoziiert ist.

7. System nach Anspruch 1 oder Verfahren nach Anspruch 6, wobei das Erzeugen der displaytypspezifischen Suchanforderung basierend zumindest zum Teil auf der Benutzerabfrage einschließt:
Bestimmen eines Abfragestichwort-Parameters, der mit der displaytypspezifischen Suchanforderung basierend auf einem oder mehreren mit der Benutzerabfrage assoziierten Abfragestichwörtern assoziiert ist;
Bestimmen des Anfangspositionsparameters, der mit der displaytypspezifischen Suchanforderung basierend zumindest zum Teil auf einem voreingestellten Anfangspositionswert assoziiert ist; und
Bestimmen des Parameters für den Umfang der angeforderten Suchergebnisse, der mit der displaytypspezifischen Suchanforderung basierend zumindest zum Teil auf einem konfigurierten mit einem Displaytyp-Bezeichner assoziierten Umfang von angeforderten Suchergebnissen assoziiert ist.

8. System nach Anspruch 1 oder Verfahren nach Anspruch 6, wobei das Erzeugen (306; 406) der Cache-Abfrageanforderung basierend zumindest zum Teil auf der displaytypspezifischen Suchanforderung und der Cache-Granularität einschließt:
Bestimmen eines Abfragestichwort-Parameters, der mit der Cache-Abfrageanforderung basierend auf einem oder mehreren mit der displaytypspezifischen Suchanforderung assoziierten Abfragestichwörtern assoziiert ist;
Bestimmen des Anfangspositionsparameters, der mit der Cache-Abfrageanforderung basierend zumindest zum Teil auf dem mit der displaytypspezifischen Suchanforderung und der Cache-Granularität assoziierten Anfangspositionsparameter assoziiert ist; und
Bestimmen des Parameters für den Umfang der angeforderten Suchergebnisse, der mit der Cache-Abfrageanforderung basierend zumindest zum Teil auf der Cache-Granularität assoziiert ist.

9. System nach Anspruch 1 oder Verfahren nach Anspruch 8, wobei der mit der Cache-Abfrageanforderung assoziierte Anfangspositionsparameter umfasst 1) ein Mehrfaches der Cache-Granularität, 2) einen Wert kleiner oder gleich dem mit der displaytypspezifischen Suchanforderung assoziierten Anfangspositionsparameter, und 3) addiert zur Cache-Granularität eine Summe, die größer oder gleich dem mit der displaytypspezifischen Suchanforderung assoziierten Anfangspositionsparameter ist.

10. System nach Anspruch 1 oder Verfahren nach Anspruch 6, wobei das Identifizieren der im Cache gespeicherten der Cache-Abfrageanforderung entsprechenden Suchergebnisse (308; 410) das Vergleichen der Cache-Abfrageanforderung mit gespeicherten Schlüsseln, die mit dem Cache assoziiert sind, umfasst.

11. Verfahren nach Anspruch 6, weiterhin umfassend das Senden (418) der zumindest teilweise ausgelesenen Suchergebnisse, die der Cache-Abfrageanforderung entsprechen, zum Gerät.

12. Verfahren nach Anspruch 6, weiterhin umfassend:
Bestimmen (408), dass die der Cache-Abfrageanforderung entsprechenden Suchergebnisse nicht im Cache gespeichert sind;
in Antwort auf die Bestimmung Benutzen einer Suchmaschine, um die der Cache-Abfrageanforderung entsprechenden Suchergebnisse (412) zu erhalten;
Speichern der Cache-Abfrageanforderung als ein mit dem Cache assoziierter Schlüssel; und
Speichern der der Cache-Abfrageanforderung entsprechenden Suchergebnisse (414) als ein Wert, der dem mit dem Cache assoziierten Schlüssel entspricht.

13. System nach Anspruch 1 oder Verfahren nach Anspruch 6, wobei die Cache-Granularität basierend zumindest zum Teil auf der Information über das historische Benutzerverhalten konfiguriert ist.

14. System nach Anspruch 1 oder Verfahren nach Anspruch 6, wobei die Cache-Granularität basierend zumindest zum Teil auf einer Mehrzahl von Parametern für Umfänge von angeforderten Suchergebnissen, die mit einer Mehrzahl von displaytypspezifischen Suchanforderungen assoziiert sind, konfiguriert ist.

15. Computerprogrammprodukt, wobei das Computerprogrammprodukt ein nicht-flüchtiges computerlesbares Speichermedium umfasst und Instruktionen umfasst zum:
Empfangen (302; 402) einer Benutzerabfrage von einem Gerät;
Erzeugen (304; 404) einer displaytypspezifischen Suchanforderung basierend zumindest zum Teil auf der Benutzerabfrage;
Erzeugen (306; 406) einer Cache-Abfrageanforderung basierend zumindest zum Teil auf der displaytypspezifischen Suchanforderung und einer Cache-Granularität, wobei die displaytypspezifische Suchanforderung mit einem ersten Format assoziiert ist und die Cache-Abfrageanforderung mit einem zweiten Format assoziiert ist, wobei das erste Format vom zweiten Format verschieden ist, und wobei die Cache-Granularität einen maximalen Umfang von Suchergebnissen umfasst, die entsprechend der Cache-Abfrageanforderung abgerufen werden sollen;
Identifizieren (308; 410) von in einem Cache gespeicherten Suchergebnissen, die der Cache-Abfrageanforderung entsprechen; und
Auslesen (310; 416) zumindest eines Teils der Suchergebnisse, die der Cache-Abfrageanforderung entsprechen basierend zumindest zum Teil auf einem Anfangspositionsparameter, der mit der displaytypspezifischen Suchanforderung assoziiert ist, und einem Parameter für den Umfang von angeforderten Suchergebnissen, der mit der displaytypspezifischen Suchanforderung assoziiert ist.

## Revendications

1. Système (300 ; 400), comprenant :
un module de réception (510), configuré pour :
recevoir (302 ; 402) une requête d'utilisateur en provenance d'un dispositif (202 ; 204) ; et
générer (304 ; 404) une demande de recherche spécifique d'un type d'affichage sur la base, au moins en partie, de la requête d'utilisateur ;
un module de conversion (520), configuré pour générer (306 ; 406) une demande de requête de mise en cache sur la base, au moins en partie, de la demande de recherche spécifique d'un type d'affichage et d'une granularité de mise en cache, le module de conversion (520) étant configuré pour convertir une pluralité de demandes de recherche spécifiques d'un type d'affichage associées à des formats respectifs d'une pluralité de formats en une ou plusieurs demandes de requête de mise en cache associées à un format uniforme, et la granularité de mise en cache comprenant un nombre maximum de résultats de recherche qui doivent être récupérés et qui correspondent à la demande de requête de mise en cache ;
un module de requête (530), configuré pour identifier des résultats de recherche (308 ; 410) qui correspondent à la demande de requête de mise en cache et qui sont stockés dans une mémoire cache ; et
un module d'extraction et de renvoi (540), configuré pour extraire (310 ; 416) au moins une partie des résultats de recherche correspondant à la demande de requête de mise en cache sur la base, au moins en partie, d'un paramètre de position de départ associé à la demande de recherche spécifique d'un type d'affichage et d'un paramètre de nombre de résultats de recherche demandés associé à la demande de recherche spécifique d'un type d'affichage.

2. Système selon la revendication 1, dans lequel la requête d'utilisateur inclut un ou plusieurs mots-clés de requête et un identifiant de type d'affichage associé au dispositif, l'identifiant de type d'affichage comprenant un identifiant de type d'affichage page par page.

3. Système selon la revendication 1, dans lequel la requête d'utilisateur inclut un ou plusieurs mots-clés de requête et un identifiant de type d'affichage associé au dispositif, l'identifiant de type d'affichage comprenant un identifiant de type d'affichage en cascade.

4. Système selon la revendication 1, dans lequel le module d'extraction et de renvoi (540) est en outre configuré pour envoyer (418) au dispositif l'au moins une partie extraite des résultats de recherche qui correspondent à la demande de requête de mise en cache.

5. Système selon la revendication 1, dans lequel le module de requête (530) est en outre configuré pour :
déterminer (408) que les résultats de recherche qui correspondent à la demande de requête de mise en cache ne sont pas stockés dans la mémoire cache ;
en réponse à la détermination, utiliser un moteur de recherche pour obtenir les résultats de recherche (412) qui correspondent à la demande de requête de mise en cache ;
stocker (414) la demande de requête de mise en cache sous la forme d'une clé associée à la mémoire cache ; et
stocker les résultats de recherche qui correspondent à la demande de requête de mise en cache sous la forme d'une valeur qui correspond à la clé associée à la mémoire cache.

6. Procédé comprenant les étapes consistant à :
recevoir (302 ; 402) une requête d'utilisateur en provenance d'un dispositif ;
générer (304 ; 404) une demande de recherche spécifique d'un type d'affichage sur la base, au moins en partie, de la requête d'utilisateur ;
générer (306 ; 406) une demande de requête de mise en cache sur la base, au moins en partie, de la demande de recherche spécifique d'un type d'affichage et d'une granularité de mise en cache, la demande de recherche spécifique d'un type d'affichage étant associée à un premier format et la demande de requête de mise en cache étant associée à un second format, le premier format étant différent du second format, et la granularité de mise en cache comprenant un nombre maximum de résultats de recherche qui doivent être récupérés et qui correspondent à la demande de requête de mise en cache ;
identifier des résultats de recherche (308 ; 410) qui correspondent à la demande de requête de mise en cache et qui sont stockés dans une mémoire cache ; et
extraire (310 ; 416), au moyen d'un ou plusieurs processeurs, au moins une partie des résultats de recherche correspondant à la demande de requête de mise en cache sur la base, au moins en partie, d'un paramètre de position de départ associé à la demande de recherche spécifique d'un type d'affichage et d'un paramètre de nombre de résultats de recherche demandés associé à la demande de recherche spécifique d'un type d'affichage.

7. Système selon la revendication 1 ou procédé selon la revendication 6, dans lequel la génération de la demande de recherche spécifique d'un type d'affichage sur la base, au moins en partie, de la requête d'utilisateur comprend les étapes consistant à :
déterminer un paramètre de mot-clé de requête associé à la demande de recherche spécifique d'un type d'affichage sur la base d'un ou plusieurs mots-clés de requête associés à la requête d'utilisateur ;
déterminer le paramètre de position de départ associé à la demande de recherche spécifique d'un type d'affichage sur la base, au moins en partie, d'une valeur de position de départ par défaut ; et
déterminer le paramètre de nombre de résultats de recherche demandés associé à la demande de recherche spécifique d'un type d'affichage sur la base, au moins en partie, d'un nombre configuré de résultats de recherche demandés associés à un identifiant de type d'affichage.

8. Système selon la revendication 1 ou procédé selon la revendication 6, dans lequel la génération (306 ; 406) de la demande de requête de mise en cache sur la base, au moins en partie, de la demande de recherche spécifique d'un type d'affichage et de la granularité de mise en cache comprend les étapes consistant à :
déterminer un paramètre de mot-clé de requête associé à la demande de requête de mise en cache sur la base d'un ou plusieurs mots-clés de requête associés à la demande de recherche spécifique d'un type d'affichage ;
déterminer le paramètre de position de départ associé à la demande de requête de mise en cache sur la base, au moins en partie, du paramètre de position de départ associé à la demande de recherche spécifique d'un type d'affichage et de la granularité de mise en cache ; et
déterminer le paramètre de nombre de résultats de recherche demandés associé à la demande de requête de mise en cache sur la base, au moins en partie, de la granularité de mise en cache.

9. Système selon la revendication 1 ou procédé selon la revendication 8, dans lequel le paramètre de position de départ associé à la demande de requête de mise en cache comprend 1) un multiple de la granularité de mise en cache 2) inférieur ou égal au paramètre de position de départ associé à la demande de recherche spécifique d'un type d'affichage, et 3) lorsqu'il est ajouté à la granularité de mise en cache, la somme est supérieure ou égale au paramètre de position de départ associé à la demande de recherche spécifique d'un type d'affichage.

10. Système selon la revendication 1 ou procédé selon la revendication 6, dans lequel l'identification des résultats de recherche (308 ; 410) qui correspondent à la demande de requête de mise en cache et qui sont stockés dans la mémoire cache comprend l'étape consistant à comparer la demande de requête de mise en cache à des clés stockées associées à la mémoire cache.

11. Procédé selon la revendication 6, comprenant en outre l'étape consistant à envoyer (418) au dispositif l'au moins une partie extraite des résultats de recherche qui correspondent à la demande de requête de mise en cache.

12. Procédé selon la revendication 6, comprenant en outre les étapes consistant à :
déterminer (408) que les résultats de recherche correspondant à la demande de requête de mise en cache ne sont pas stockés dans la mémoire cache ;
en réponse à la détermination, utiliser un moteur de recherche pour obtenir les résultats de recherche (412) qui correspondent à la demande de requête de mise en cache ;
stocker la demande de requête de mise en cache sous la forme d'une clé associée à la mémoire cache ; et
stocker les résultats de recherche (414) qui correspondent à la demande de requête de mise en cache sous la forme d'une valeur qui correspond à la clé associée à la mémoire cache.

13. Système selon la revendication 1 ou procédé selon la revendication 6, dans lequel la granularité de mise en cache est configurée sur la base, au moins en partie, d'une information de comportement d'utilisateur historique.

14. Système selon la revendication 1 ou procédé selon la revendication 6, dans lequel la granularité de mise en cache est configurée sur la base, au moins en partie, d'une pluralité de paramètres de nombre de résultats de recherche demandés associés à une pluralité de demandes de recherche spécifiques d'un type d'affichage.

15. Produit de programme informatique, le produit de programme informatique comprenant un support de stockage non temporaire lisible par ordinateur et comprenant des instructions pour :
recevoir (302 ; 402) une requête d'utilisateur en provenance d'un dispositif ;
générer (304 ; 404) une demande de recherche spécifique d'un type d'affichage sur la base, au moins en partie, de la requête d'utilisateur ;
générer (306 ; 406) une demande de requête de mise en cache sur la base, au moins en partie, de la demande de recherche spécifique d'un type d'affichage et d'une granularité de mise en cache, la demande de recherche spécifique d'un type d'affichage étant associée à un premier format et la demande de requête de mise en cache étant associée à un second format, le premier format étant différent du second format, et la granularité de mise en cache comprenant un nombre maximum de résultats de recherche qui doivent être récupérés et qui correspondent à la demande de requête de mise en cache ;
identifier (308 ; 410) des résultats de recherche qui correspondent à la demande de requête de mise en cache et qui sont stockés dans une mémoire cache ; et
extraire (310 ; 416) au moins une partie des résultats de recherche correspondant à la demande de requête de mise en cache sur la base, au moins en partie, d'un paramètre de position de départ associé à la demande de recherche spécifique d'un type d'affichage et d'un paramètre de nombre de résultats de recherche demandés associé à la demande de recherche spécifique d'un type d'affichage.
